# EUROPEAN PATENT APPLICATION

(11) **EP 2 720 442 A1**
(43) Date of publication of application: **16.04.2014**
(21) Application number: 12800123.7
(22) Date of filing: 29.05.2012
(51) Int. Cl.: H04M 1/00

(54) **COMMUNICATION SYSTEM**

(30) Priority: 13.06.2011 JP 2011131111
(71) Applicant: NEC CASIO Mobile Communications, Ltd., Kawasaki-shi, Kanagawa 211-8666 (JP)
(72) Inventor: IKEDA, Ryuichi, Kawasaki-shi Kanagawa 211-8666 (JP)
(74) Representative: Vossius & Partner
(86) International application number: PCT/JP2012/063783
(87) International publication number: WO 2012/172970

(57) **Abstract**

A first communication device determines whether or not reception information indicating reception of predetermined information should be transmitted to a second communication device. The first communication unit transmits the reception information, which has been determined to be information that should be transmitted to the second communication device, to the second communication device. The second communication device produces output based on the reception information that has been transmitted from the first communication device.

## Description

### Technical Field

The present invention relates to a communication system for giving information, communication apparatus and notifying method and program.

### Background Art

Recently, attention has been paid to a technology for establishing cooperation between a mobile communication terminal and a wrist-worn terminal by BLE (Bluetooth Low Energy).

For example, when receiving an incoming call or email, the mobile communication terminal transmits the sender information (telephone number or email address) to a wrist-worn terminal so as to make the wrist-worn terminal display the information on that sender. Thereby, the person wearing the wrist-worn terminal can recognize that an incoming call or an email has been received.

Further, when the sender information is stored in the address book registered in the mobile communication terminal, the sender's name or the like that is stored in association with that information is transmitted from the mobile communication terminal so as to display the name or the like on the wrist-worn terminal.

Alternatively, attention has been paid to an incoming call forwarding technologies whereby, a mobile phone, upon receiving an incoming call, forwards the incoming call only to a mobile phone that has been registered beforehand in the former mobile phone (see Patent Document 1, for example).

### Related Art Document

### Patent Document

Patent Document 1: JP2007-081498A

### Summary of the Invention

### Problems to be solved by the Invention

In the above technology, regardless of who makes a call or sends an email, notification, display and/or forwarding of all incoming calls and email is carried out. That is, even if there is one incoming call or email from amongst a plurality of calls or emails, for which notification, display or forwarding is not necessary, notification, display and/or forwarding will be performed for all received calls and emails. In other words, a problem occurs in which notification that is not needed still carried out. Further, it is also impossible to selectively receive notice of incoming calls and reception of emails from particular senders only, from among all the incoming calls and reception of emails.

The object of the present invention is to provide a communication system, communication device and notifying method and program that solve the above problem.

### Means for Solving the Problems

A communication system of the present invention includes a first communication device and a second communication device, wherein
the first communication device includes:
a first communication unit that receives predetermined information;
a transmission determining unit that determines whether or not reception information indicating that the first communication unit has received the information should be transmitted to the second communication device; and,
a second communication unit that transmits the reception information, which the transmission determining unit has determined should be transmitted to the second communication device, to the second communication device, and
the second communication device includes:
   a receiving unit that receives the reception information; and
   an output unit that produces output based on the reception information received by the receiving unit.

A communication device of the present invention includes:
a first communication unit that receives predetermined information;
a transmission determining unit that determines whether or not reception information indicating that the first communication unit has received the information should be transmitted to another communication device; and,
a second communication unit that transmits the reception information, which the transmission determining unit has determined should be transmitted, to the other communication device.

A notifying method of the present invention is a notifying method for use in a communication system having a first communication device and a second communication device, comprising the steps of:
the first communication unit, determining whether or not reception information indicating reception of predetermined information should be transmitted to the second communication device;
the first communication unit, transmitting the reception information, which has been determined to be information that should be transmitted to the second communication device, to the second communication device, and
the second communication device, producing output based on the reception information that has been transmitted from the first communication device.

A program of the present invention is a program that causes a communication device to execute:
a step of determining whether or not reception information indicating reception of predetermined information should be transmitted to another communication device; and,
a step of transmitting the reception information, which has been determined to be information that should be transmitted, to the other communication device.

### Effect of the Invention

As described heretofore, in the present invention it is possible to avoid receipt of unnecessary notification.

### Brief Description of the Drawings

FIG. 1 A diagram showing one configuration of a communication system of the present invention.
FIG. 2 A diagram showing one example of an internal configuration of a mobile terminal shown in FIG. 1.
FIG. 3 A diagram showing one example of a detailed internal structure of a mobile terminal shown in FIG. 1.
FIG. 4 A diagram showing one example of notifying operation settings stored in a storing unit shown in FIG. 3.
FIG. 5 A diagram showing one example of an address book stored in a storing unit shown in FIG. 3.
FIG. 6 A diagram showing one example of an internal structure of a wrist-worn terminal shown in FIG. 1.
FIG. 7 A sequence diagram for illustrating one example of a notifying method in a communication system shown in FIG. 1.

### Mode for Carrying Out the Invention

Next, the embodied mode of the present invention will be described with reference to the drawings.

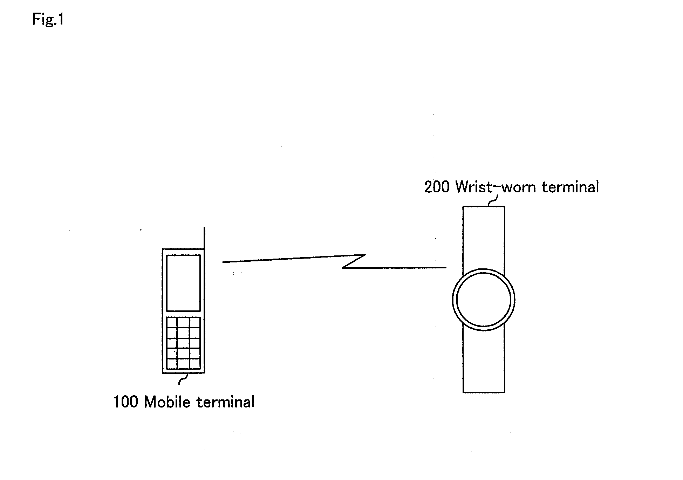

FIG. 1 is a diagram showing one configuration of a communication system of the present invention.

As shown in FIG. 1, this configuration includes mobile terminal 100 and wrist-worn terminal 200.

Mobile terminal 100 is a first communication device (base unit) having communication functions that include making and receiving phone calls, transmitting and receiving emails and communicating with wrist-worn terminal 200, and is a device such as a mobile telephone, mobile terminal, tablet type or notebook type PC (Personal Computer), smart phone, PDA (Personal Digital Assistants), game player and the like.

Wrist-worn terminal 200 is a second communication device (extension) that can communicate with mobile terminal 100. Also, wrist-worn terminal 200 may have a structure that allows itself to be worn on a wrist like a wristwatch.

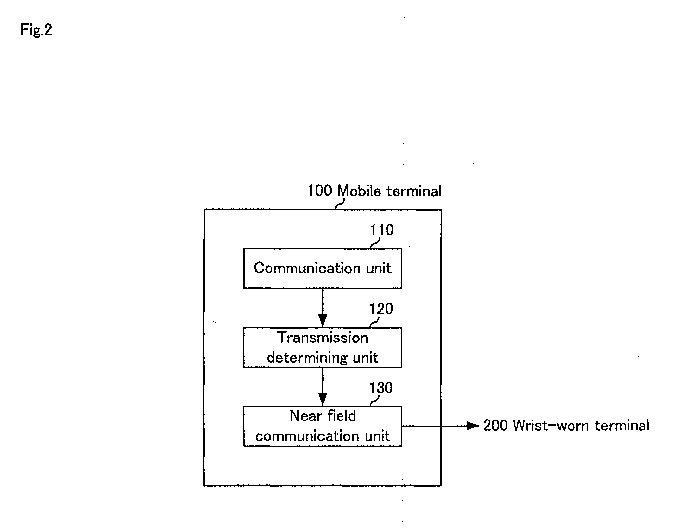

FIG. 2 is a diagram showing one example of an internal configuration of mobile terminal 100 shown in FIG. 1.

Mobile terminal 100 shown in FIG. 1 includes communication unit 110, transmission determining unit 120 and near field communication unit 130, as shown in FIG. 2.

Communication unit 110 is a first communication unit that receives predetermined information. Communication unit 110 receives incoming calls to mobile terminal 100 and receives emails transmitted to mobile terminal 100.

Communication determining unit 120 determines whether or not reception information, indicating that communication unit 110 has received information, should be transmitted (notified) to wrist-worn terminal 200. The specific determining method will be described later.

Near field communication unit 130 is a second communication unit which transmits the reception information, that was determined to be information that should be transmitted to wrist-worn terminal 200 by determining unit 120, to wrist-worn terminal 200. Near field communication unit 130 also transmits the reception information, using a near field communication function such as Bluetooth or the like.

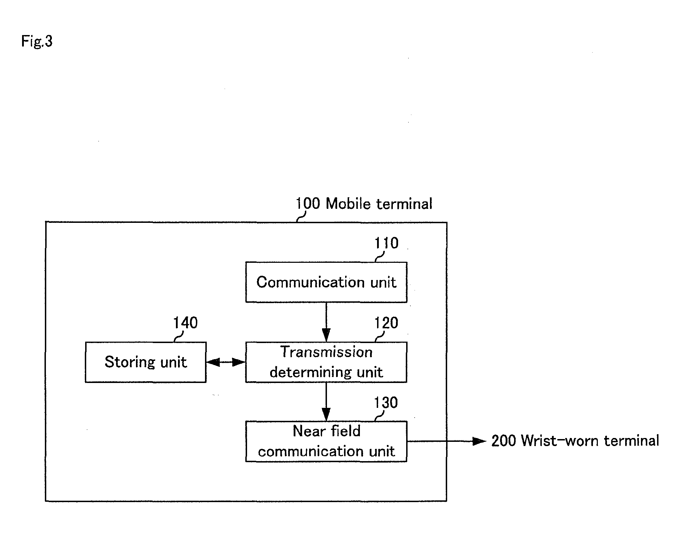

FIG. 3 is a diagram showing one example of a detailed internal structure of mobile terminal 100 shown in FIG. 1.

Mobile terminal 100 shown in FIG. 1 includes communication unit 110, transmission determining unit 120, near field communication unit 130 and storing unit 140, as shown in FIG. 3.

Communication unit 110 and near field communication unit 130 are the same as those shown in FIG. 2.

Storing unit 140 previously stores predetermined conditions to be used for determination in transmission determining unit 120.

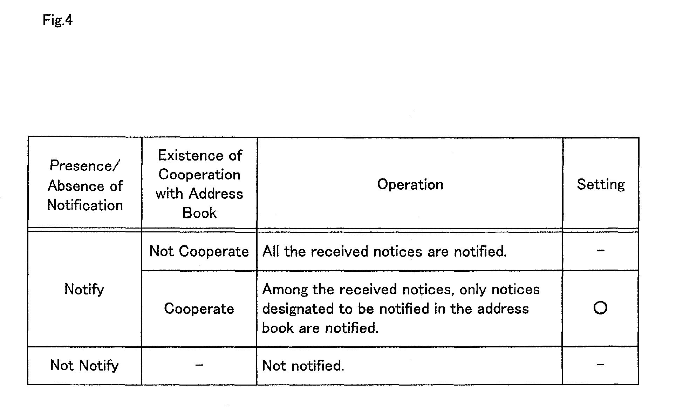

FIG. 4 is a diagram showing one example of notifying operation settings stored in storing unit 140 shown in FIG. 3.

In storing unit 140 shown in FIG. 3, the presence or absence of notification, the presence or absence of cooperation with address books and the associated operation to be made are stored as shown in FIG. 4, and the currently selected association can be known among these associations. In the example shown in FIG. 4, the selected association at present is marked (with a ○-mark) and stored.

The associations shown in FIG. 4, specify the operations such that, when the presence or absence of notification is "notify" and the presence or absence of cooperation with address books is "not cooperate", all the notices (to the effect that the terminal has received incoming calls and emails, the same hereinbelow), are notified to wrist-worn terminal 200; when the presence or absence of notification is "notify" and the presence or absence of cooperation with address books is "cooperate", among the notices that mobile terminal 100 has received, only those that have been designated to be notified in the address book are notified to wrist-worn terminal 200; and, when the presence or absence of notification is "not notify", any notice which mobile terminal 100 has received will not be notified to wrist-worn terminal 200. Further, as shown in FIG. 4, the presence or absence of notification is "notify" and the presence or absence of cooperation with the address book is "cooperate" (this setting is indicated with a ○-mark), mobile terminal 100 performs an operation such that, among the notices that mobile terminal 100 has received, only those that have been designated to be notified in the address book are notified to wrist-worn terminal 200.

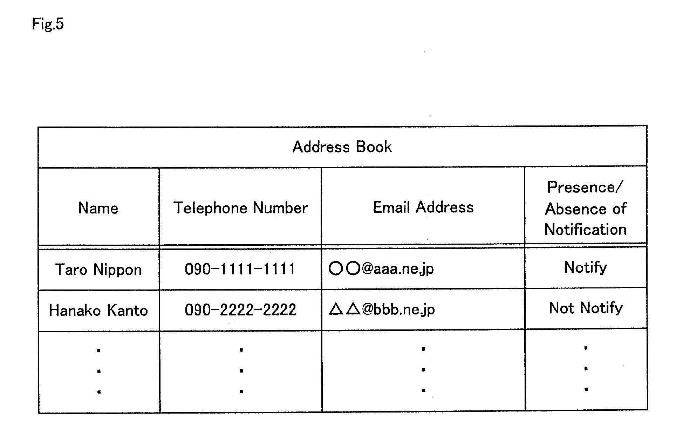

FIG. 5 shows one example of an address book stored in storing unit 140 shown in FIG. 3.

Stored in storing unit 140 shown in FIG. 3 is an address book in which names, telephone numbers and email addresses are included so that they correspond to each other, as shown in FIG. 5. This also includes the presence or absence of notification in each entry.

Though, in the example shown in FIG. 5, each name is associated with one telephone number and one email address, one name may be associated with a plurality of telephone numbers and a plurality of email addresses.

The content in the notifying operation setting in FIG. 4 and the content in the address book shown in FIG. 5 can be externally modified, added and deleted.

Transmission determining unit 120, based on the conditions stored in storing unit 140, determines whether or not reception information should be transmitted to wrist-worn terminal 200.

By taking an example where the associations shown in FIG. 4 and the address book shown in FIG. 5 are stored in storing unit 140, the operation of transmission determining unit 120 will be described.

When receiving an incoming call from a telephone number "090-1111-1111", or an email from an email address "○○@aaa.ne.jp", transmission determining unit 120 determines that a notice of the incoming call or the email reception should be given (transmitted) to wrist-worn terminal 200. When receiving an incoming call from a telephone number "090-2222-2222", or an email from an email address "ΔΔ@bbb.ne.jp", transmission determining unit 120 determines that a notice of the incoming call or the email reception should not be given (transmitted) to wrist-worn terminal 200.

As condition information that is stored in storing unit 140, email subjects (Subject), names of files attached to emails, the existence of files attached to emails and the like may be stored. For example, when an email subject is stored as condition information in storing unit 140, transmission determining unit 120 may determine that reception of an email, if the subject of the received email is the same as that stored in storing unit 140, should be notified.

Here, when transmission determining unit 120 determines to transmit reception information, it is also possible for near field communication unit 130 to transmit reception information that includes information about the sender, such as the telephone number, email address and associates name of the sender.

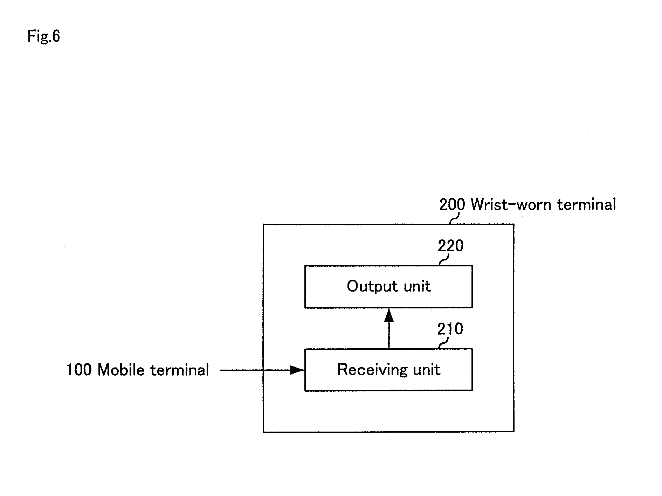

FIG. 6 is a diagram showing one example of an internal structure of wrist-worn terminal 200 shown in FIG. 1.

Wrist-worn terminal 200 shown in FIG. 1 includes receiving unit 210 and output unit 220, as shown in FIG. 6.

Receiving unit 210 receives the reception information transmitted from mobile terminal 100. Also, receiving unit 210 receives the reception information transmitted from mobile terminal 100 by use of a near field communication function such as Bluetooth or the like.

Output unit 220 produces output based on the reception information which receiving unit 210 has received. The output based on the reception information may be a display that represents a notice indicating an incoming call or receipt of an email, and sender information included in the reception information (the telephone number, email address, name and the like of the sender), sound output, vibration, lighting/flashing of a light emitting device, or combination of these. That is, any form of output may be used as long as the person who holds (wears) wrist-worn terminal 200 can recognize the output.

Hereinbelow, the notifying method in the communication system shown in FIG. 1 will be described.

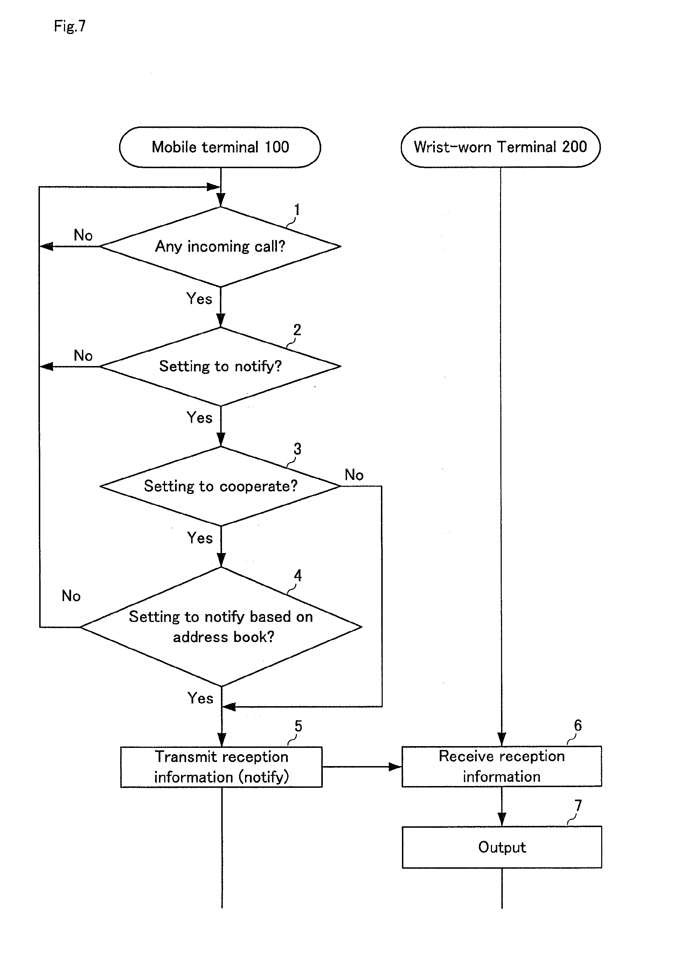

FIG. 7 is a sequence diagram for illustrating one example of a notifying method in the communication system shown in FIG. 1. Herein, the process when mobile terminal 100 has received an incoming call will be described as an example. Here, a case where an email is transmitted to mobile terminal 100, the same process may be performed.

When an incoming call arrives at communication unit 110 of mobile terminal 100 at Step 1, transmission determining unit 120 refers to the notifying operation settings stored in storing unit 140 to check whether or not a notification should be given, at Step 2. Specifically, in the case of the association shown in FIG. 4, it is determined which "○" is stored in, "notify" or "not notify", in the setting of "presence or absence of notification.

When "notify" has been selected, transmission determining unit 120, referring to the notifying operation settings stored in storing unit 140, determines whether cooperation with the address book has been selected, at Step 3. Specifically, in a case of the association shown in FIG. 4, a determination is made which "○" is stored in, "not cooperate" or "cooperate", in the setting of "presence or absence of cooperation".

On the other hand, when it is found at Step 2 that "not notify" has been selected, no notification process is implemented.

When cooperation with the address book has been selected, transmission determining unit 120 determines whether or not the telephone number of the sender of the incoming call should be notified to the wrist-worn terminal, by referring to the address book stored in storing unit 140, at Step 4.

For example, when the telephone number of the sender is "090-1111-1111" while the address book shown in FIG. 5 is stored in storing unit 140, the presence or absence of notification associated with the telephone number "090-1111-1111" in the address book is "notify" so that it is determined that this telephone number should be notified to the wrist-worn terminal. On the other hand, when the telephone number of the sender is "090-2222-2222" while the address book shown in FIG. 5 is stored in storing unit 140, the presence or absence of notification associated with the telephone number "090-2222-2222" in the address book is "not notify" so that it is determined that this telephone number should not be notified to the wrist-worn terminal. Further, when the telephone number of the sender is not found in the address book stored in storing unit 140, it is determined that the telephone number is not notified to the wrist-worn terminal.

When it is determined that the telephone number of the sender of the incoming call should be notified to the wrist-worn terminal, near field communication unit 130 transmits a reception information indicating the incoming call to wrist-worn terminal 200, at Step 5. In this case, the reception information may include the sender information as stated above. This sender information may be the telephone number of the sender, the name associated with the telephone number in storing unit 140, or any form as long as the sender can be known.

When cooperation with address books has not been selected at Step 3, near field communication unit 130 also transmits reception information to wrist-worn terminal 200 in the same manner.

When, at Step 6, receiving unit 210 receives the reception information transmitted from near field communication unit 130, output unit 220 produces output based on the reception information at Step 7. This output may be a display showing a notice of an incoming call, sound output, vibration, and lighting or flashing of a light emitting device. When the reception information includes the sender information (e.g., telephone number), the sender information may be displayed.

As described heretofore, in the present invention, because it is possible to designate settings such that notices are received only from arbitrary senders, the person wearing wrist-worn terminal 200 can receive only the necessary notices in a situation where it is desirable to minimize interruption, for example, during an important conference is being held.

The process that each component, that is supplied to the above-described mobile terminal 100, performs, may be realized by a logical circuit produced depending on purposes. Alternatively, a computer program (which will be referred to hereinbelow as program) describing the sequence of the processing contents is recorded on a recording medium that can be read by mobile terminal 100, so that the program recorded on this recording medium can be loaded into mobile terminal 100 and executed thereby. Examples of the recording medium that can be read by mobile terminal 100 include removable recording media such as floppy (registered trademark) disks, magneto optical disks, DVDs, CDs, etc., and HDDs and memories such as ROM, RAM and the like incorporated in mobile terminal 100. The program recorded on the recording medium is read by the CPU (not shown) provided for mobile terminal 100, and the same operations described above are carried out by the control of the CPU. Here, the CPU operates as a computer for executing the program loaded from the recording medium with the program recorded thereon.

Although the present invention has been explained with reference to the exemplary embodiment, the present invention should not be limited to the above exemplary embodiment. Various modifications that can be understood by those skilled in the art may be made to the structures and details of the present invention within the scope of the present invention.

This application claims priority based on Japanese Patent Application No. 2011-1331111, filed on June 13, 2011, and should incorporate all the disclosure thereof herein.

## Claims

1. A communication system including a first communication device and a second communication device, wherein
the first communication device includes:
a first communication unit that receives predetermined information;
a transmission determining unit that determines whether or not reception information indicating that the first communication unit has received the information should be transmitted to the second communication device; and,
a second communication unit that transmits the reception information which the transmission determining unit has determined should be transmitted to the second communication device, to the second communication device, and
the second communication device includes:
a receiving unit that receives the reception information; and
an output unit that produces output based on the reception information received by the receiving unit.

2. The communication system according to Claim 1, wherein
the first communication device includes a storing unit that previously stores predetermined condition information, and
the transmission determining unit, based on condition information stored in the storing unit, determines whether or not the reception information should be transmitted to the second communication device.

3. The communication system according to Claim 1 or Claim 2, wherein
the second communication unit transmits the reception information included with sender information representing the sender who transmitted the information received by the first communication unit.

4. The communication system according to any one of Claims 1 to 3, wherein
the second communication unit transmits the reception information by use of near field communication, and
the receiving unit receives the reception information by use of near field communication.

5. A communication device including:
a first communication unit that receives predetermined information;
a transmission determining unit that determines whether or not reception information indicating that the first communication unit has received the information should be transmitted to another communication device; and,
a second communication unit that transmits the reception information which, the transmission determining unit has determined should be transmitted, to the other communication device.

6. A notifying method for use in a communication system having a first communication device and a second communication device, comprising the steps of:
the first communication unit, determining whether or not reception information indicating reception of predetermined information should be transmitted to the second communication device;
the first communication unit, transmitting the reception information, which has been determined to be information that should be transmitted to the second communication device, to the second communication device, and
the second communication device, producing output based on the reception information that has been transmitted from the first communication device.

7. A program that causes a communication device to execute:
a step of determining whether or not reception information indicating reception of predetermined information should be transmitted to another communication device; and,
a step of transmitting the reception information, which has been determined to be information that should be transmitted, to the other communication device.
